# EUROPEAN PATENT APPLICATION

(11) **EP 0 947 911 A2**
(43) Date of publication of application: **06.10.1999**
(21) Application number: 99302606.1
(22) Date of filing: 01.04.1999
(51) Int. Cl.: G06F 3/033

(54) **A user interface device for managing complex object relationships**

(30) Priority: 03.04.1998 US 80581 P; 30.06.1998 US 107995
(71) Applicant: AVID TECHNOLOGY, INC., Tewksbury, MA 01876 (US)
(72) Inventor: Sterling, Darren S., Palo Alto CA 94306 (US); Bouchard, Jean-Claude, Sainte-Adele, Quebec J0R 1LO (CA)
(74) Representative: Hogg, Jeffery Keith

(57) **Abstract**

A user-interface device for working with views of complex pictures employs iconic navigation aids called "beacon nodes." The invention is particularly suited to large complex schematic drawings that are useful to view at various zoom factors to selectively view details and also to see a larger portion for context. The difficulty of returning to one set of features after focusing on another set of features is addressed. The user defines groups of elements (called 'clans') for which a close-up view is desired to be defined. The interface allows such views or groups of elements to be named and associated with a beacon node. (The user may zoom out from a saved view or close-up of a group of objects and zoom in on another view. To return to the saved view or close-up, the user can zoom out.) The beacon node may always be visible by insuring it is not scaled below a certain size. The beacon nodes may be colored to help the user distinguish them. By selecting a beacon node, for example, by clicking on it using a mouse, the display frames the corresponding clan.

## Description

### Field of the Invention

The invention relates to user interfaces that display relationships between large numbers of data objects in a schematic graphical representation and more particularly to mechanisms for managing panning and zooming to help find data in such a representation.

### Background

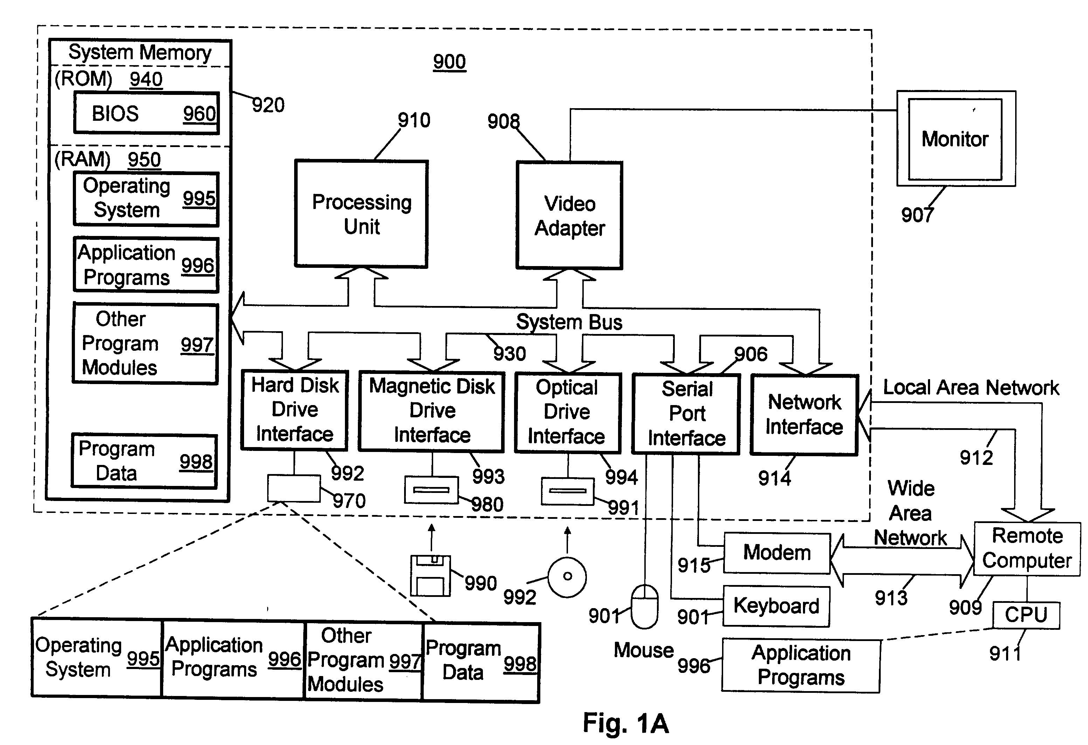

Referring to Fig. 1, a graphical schematic representation of a large set of data objects shows a hierarchical tree structure of the data. Such a schematic can be used to represent relationships among many different kinds of data objects, for example, hierarchical links defining how properties are propagated to different objects in a 3-D scene. Each level of the hierarchy, in this example, has properties which are inherited by all subordinate levels. The properties and the 3-D objects, or any other kind of data object susceptible to a large complex schematic view, may all be referred to generally as *data nodes. A* user interface allows the relationships between data nodes to be altered with the assistance of the display. For example an interface may allow connections to be changed by moving connectors using a mouse. In any event, a large complex set of relationships can be represented on a fixed sized screen if the user is enabled to zoom in and out and pan the display so that the user can focus on a particular subset of the data structure.

In a large data structure, the number of data nodes and connections is so numerous that when the user zooms out to view the entire schematic, or a large portion thereof, it is difficult for the user to see a particular set of relationships and thus zoom in on a particular view that shows it well. If more than 100 nodes are displayed, the nodes may merge making it difficult for the user to set up a desired view of the schematic (normally achieved by zooming and panning). Users are forced to remember approximate locations of subsets of the entire data set. Imperfect estimation can lead to repeated zooming and panning to find a desired subset.

An iterative drawing algorithm may loop through each node and scale it based on a current zoom factor. The end result, presented to the user, is that each node is uniformly scaled. If the scale factor is small (zoom factor low or "zoomed-out"), the nodes become unusable as orienting devices because they cannot be displayed.

### Summary of the Invention

The invention provides a special type of node that identifies groups of related nodes in the schematic. These nodes - which are not part of the scene data itself- are called beacon nodes. To define a beacon node, the user may select a set of data nodes (called a 'clan') such as by bounding with a "rubber band." The user can then request that a beacon node be defined for that view/selection. The user-interface produces a visible icon, which may be no more than a black square, that marks the view/selection. Clicking a mouse on that icon causes the display to frame the corresponding 'clan' (i.e., to shift to a view that fills the screen substantially with the set of objects that are part of the clan). The selection of data nodes to associate with a view has the advantage that the view can be sized to fit the current set of data nodes identified with the beacon node. When data nodes are deleted from the data structure, the display driver still has its reference points for reconstructing a view.

Beacon nodes may be displayed at a constant or minimum size so that when the display is zoomed out to show a large number of data nodes, the beacon nodes remain visible. Thus, even when the data nodes are too small to display at all, the beacon nodes will remain visible. To bring up a view associated with a beacon node, it may only be necessary to click on the beacon node with a mouse pointer.

For example, suppose a user is working on a complex 3-D scene with twenty buildings. The user sets up a schematic view that uses data nodes representing different attributes of each building including geometry for each building. In the example there may be 2000 nodes. Such a set of relationships is very difficult to perceive from a bird's eye view not even to mention the inability of most displays to even show it without elements merging together. The user zooms in and out searching for a particular set of data nodes and finally locates them. Once found, the user can draw a bounding box around a set of data nodes to define a selection set. Using a context menu or keyboard shortcut, the user may define a beacon node. A dialogue box may open for the user to identify the beacon node with a name. Also, the beacon node may be given a color to make it easier to recall.

When the user wants to return to the particular view of a set of data nodes the artist previously associated with the beacon node, the user can zoom out to a bird's eye view (or look at a separate, floating or docked "bird's eye view") and see the node. At a bird's eye view, the user can still see the beacon nodes because they are displayed at a minimum size. For example, a particular building's data nodes may be identified by one beacon node and another building's data nodes with a different beacon node. Providing the beacon nodes with different colors makes it easier to distinguish the different beacon nodes. When the mouse pointer is moved over a node, a tool tip box may pop-up to display the name of the beacon node. The user, after confirming the pointer is over the desired beacon node can simply click the mouse and the display immediately changes to a view that shows the selected data nodes associated with the selected beacon node. That is, all of the beacon node's clan are visible. Note that it is possible for a beacon node to be defined to include other beacon nodes to form hierarchical relationships. If a third beacon node is identified with first and second beacon nodes, clicking on the third beacon node may invoke a view that encompasses the views of the "clan" beacon nodes.

According to one embodiment, the invention is a method implementable on a computer. This method allows the invoking of views of a picture on a display. In an embodiment, the method applies to pictures with multiple picture elements such as a schematic showing connections between multiple data objects. For example, in a 3-D scene, a hierarchical structure between 3-D objects, allow inheritance of parameter values from parent objects. In a complex scene, such data objects can number in the thousands. The method does the following steps beginning with selecting one of a group of picture elements and then labeling and storing a selection. The selection may be responsive to a result of the step of selecting. The selection provides enough information to allow the computer to reconstruct a view either by showing a selected part of the picture or by displaying the data objects large enough to be clearly visible. The method goes on to paint an icon on top of the picture elements and store an association between the icon and the one of a group and a view. The method may change the display to show first and second different views of the picture and then later detect a selection of the icon by the icon selector. Responsively to the detection, the display may be changed to display the group or view. The picture may be a schematic diagram showing relationships between data objects. The detection step may involve pointing with a pointer such as a mouse-pointer or any other pointing device (such as a light pen, trackball, etc). Displaying the saved view may amount to displaying the group of picture elements such that the group is substantially coextensive with the display. The step of painting may include selectively scaling the icon concurrently with a scaling of the picture such that icon remains visible on the display irrespective of a scale of the schematic. The step of labeling may include typing a name string identifying the one of a group and a view.

According to another embodiment, the invention provides a method for navigating a display of a computer. The steps are selecting a portion of the picture, storing a definition of the selection, painting an icon on top of the picture portion, and scaling the picture so that substantially the entire picture fits on the display. The picture can be large enough that details of the picture are not clearly visible. A scale-factor used in painting the icon should be such that the icon remains clearly visible when the entirety of the picture is displayed. When the icon is selected, the portion of the picture saved is displayed. The step of displaying may include rendering a picture from a group of objects identified with the icon and a relationship between the group of objects that is a defined feature of the picture. The step of applying may include permitting a scaling of the icon proportionately with the picture down to a threshold scale of the picture and maintaining the icon at a minimum size for picture scales below the threshold scale of the picture. The step of selecting may include displaying a desired group of nodes (called 'clan'); and indicating a request to save the desired clan. The step of storing, in this case, would be responsive to the step of indicating a request. The step of selecting may include selecting a group of the picture elements. The step of selecting may include pointing to the icon with a pointing tool. An additional step of identifying a color to be used in painting the icon may be included in the method. The step of identifying a shape to be used in painting the icon may be added as well.

According to yet another embodiment, the invention provides a method for navigating a display of a computer displaying a picture composed of picture elements. The method includes selecting a portion of the picture, storing a definition of the portion, painting a navigational aid on the display and scaling the picture such that substantially the entire picture fits on the display. The picture is assumed large enough that details of the picture are not clearly visible. The method further includes applying a scale-factor in painting the navigational aid such that the navigational aid remains clearly visible when the entirety of the picture is displayed and selecting the navigational aid. Finally the method includes displaying the portion of the picture responsively to the step of selecting.

According to still another embodiment, the invention is a system for representing picture representing data objects and relationships therebetween. The system has an input device to define and edit relationships among the data objects. It also has a display device to display the picture, the display device being operable to zoom and pan to display all or selected portions of the picture. It also has a first selection device to define at least one group of the data objects and a corresponding visual navigation aid for the group. A visual navigational aid is displayed such that it is clearly visible at all levels of zoom of the picture. The invention provides a second selection device to indicate a selection of the visual navigation aid. The display device is programmed to display the group responsively to a selection of the corresponding visual navigation aid, such that each of the data objects of the group is clearly visible.

### Brief Description of the Drawings

Fig. 1A illustrates a conventional computer system according to the prior art.

Fig. 1 shows a zoomed in view of schematic diagram showing an inverted tree that represents hierarchical relationships between data objects.

Fig. 2 shows a zoomed-out view of the schematic diagram of Fig. 2 in which the data objects have been scaled below the level of clear visibility.

Fig. 3 shows the view of the schematic of Fig. 2 with beacon nodes which identify constellations of objects that may be used to construct a zoomed-in view.

Fig. 4 shows the view of Fig. 3 with a bird's eye view that orient's the current view relative to the entire schematic.

### Detailed Description of the Embodiments

Referring to Fig. 1A, a suitable computing environment in which the invention may be implemented, with various computer system configurations such as the one depicted. Note that the invention may be practiced in distributed computing environments, where tasks are performed by remote processing devices linked through a communications network with program modules located in local and/or remote storage devices. An exemplary system includes a conventional personal computer 900, with a processing unit 910, a system memory 920, and a system bus 930 interconnecting system components, including the system memory to the processing unit 910. The system bus 930 may be any structure including a memory bus or a memory controller, a peripheral bus, or a local bus. The system memory includes read only memory (ROM) 940 and a random access memory (RAM) 950. A basic input/output system 960 (BIOS), containing the basic routines that helps to transfer information between elements within the personal computer 900, such as during start-up, is stored in ROM 940. The personal computer 900 further includes a hard disk drive 970, a magnetic (e.g., floppy) disk drive 980 with a removable magnetic disk 990, and an optical disk drive 991 with a removable optical disk 992. The hard disk drive 970, magnetic disk drive 980, and optical disk drive 991 are connected to the system bus 930 by a hard disk drive interface 992, a magnetic disk drive interface 993, and an optical disk drive interface 994, respectively. Other types of computer readable media may be used to store data as well, such as magnetic cassettes, flash memory cards, digital video disks, Bernoulli cartridges, random access memories (RAMs), read only memories (ROMs), and the like.

Program modules may be stored on the hard disk, magnetic disk 990, optical disk 992, ROM 940 or RAM 950, including an operating system 950, one or more application programs 996, other program modules 997, and program data 998. A user may enter commands and information into the personal computer 900 through input devices such as a keyboard 901 and a pointing device 901. Other input devices (not Shown) may include a microphone, joystick, game pad, satellite dish, scanner, or the like. These and other input devices are often connected to the processing unit 910 through a serial port interface 46 that is coupled to the system bus, but may be connected by other interfaces, such as a parallel port, game port or a universal serial bus (USB). A monitor 907 or other type of display device is also connected to the system bus 930 via an interface, such as a video adapter 908. In addition to the monitor, personal computers typically include other peripheral output devices (not shown), such as speakers and printers.

The personal computer 900 may operate in a networked environment using logical connections to one or more remote computers, such as a remote computer 909. The remote computer 909 may be another personal computer, a server, a router, a network PC, a peer device or other common network node, and typically includes many or all of the elements described above relative to the personal computer 900, although only a CPU 911 has been illustrated in Figure 1. The logical connections depicted in Figure 1 include a local area network (LAN) 912 and a wide area network (WAN) 913. Such networking environments are commonplace in offices, enterprise-wide computer networks, intranets and the Internet.

When used in a LAN networking environment, the personal computer 900 is connected to the local network 912 through a network interface or adapter 914. When used in a WAN networking environment, the personal computer 20 typically includes a modem 915 or other means for establishing communications over the wide area network 913, such as the Internet. The modem 915 is connected to the system bus 930 via the serial port interface 906. In a networked environment, program modules, or portions thereof, may be stored in the remote memory storage device. It will be appreciated that the network connections shown are exemplary and other means of establishing a communications link between the computers may be used.

As is familiar to those skilled in the art, the computer system 900 further includes an operating system and at least one application program. The operating system controls the computer system's operation and the allocation of resources. The application program is a set of software that performs a task desired by the user, making use of computer resources made available through the operating system. Both may be resident in the illustrated memory 920 or in another store as suggested above.

In accordance with the practices of persons skilled in the art of computer programming, the invention may be described with reference to acts and symbolic representations of operations that are performed by the computer system 900, unless indicated otherwise. Such acts and operations are sometimes referred to as being computer-executed. It will be appreciated that the acts and symbolically represented operations include the manipulation by the CPU 910 of electrical signals representing data bits which causes a resulting transformation or reduction of the electrical signal representation, and the maintenance of data bits at memory locations in the memory system 22 to thereby reconfigure or otherwise alter the computer system's operation, as well as other processing of signals. The memory locations where data bits are maintained are physical locations that have particular electrical, magnetic, optical, or organic properties corresponding to the data bits.

In an illustrative embodiment of the invention, the computer system 20 preferably uses the Windows 95 or Windows 98 client server operating system. However, other client/server operating systems (e.g. Windows NT, O/S2 by IBM, Mac OS, UNIX, Windows CE, etc.) can also be used. A client/server operating system is an operating system which is divided into multiple processes of two different types: server processes, each of which typically implements a single set of services, and client processes, which request a variety of services from the service processes. Object oriented programming is used to design the client/server operating system, and applications which run under the client/operating system, where objects represent system resources.

For example, the Windows 95 client/server operating system provides shareable resources, such as files, memory, processes and threads, which are implemented as "objects" and may be accessed by using "object services." As is well known in the art, an "object" is a data structure whose physical format is hidden behind a type definition. Data structures, also referred to as records or formats, are organization schemes applied to data so that it can be interpreted, and so that specific operations can be performed on that data. Such data structures impose a physical organization on the collection of data stored within the computer memory 920 and represent specific electrical, magnetic or organic elements.

An "object type," also called an "object class," comprises a data-type, services that operate in instances of the data type, and a set of object attributes. An "object attribute" is a field of data in an object that partially defines that object's state. An "object service" implements and manipulates objects, usually by reading or changing the object attributes. "Object oriented design" is a software development technique in which a system or component is expressed using objects.

An object typically has two components: a function table, containing a pointer to each object member function (i.e., sometimes known as an object method) defined in the object's class, and a data block, containing the current values for each object variable (i.e., data members, sometimes known as an object property). An application has some reference to an object through the object pointer. An application obtains this object reference by using some type of function call (direct or implied) in which that function allocates an object block in computer memory, initializes the function table, and returns the reference to the computer memory to an application. The computer memory may be local or distributed on a remote computer.

The Windows 95 operating system allows users to execute more than one program at a time by organizing the many tasks that it must perform into "processes." The operating system allocates a portion of the computer's resources to each process and ensures that each process's program is dispatched for execution at the appropriate time and in the appropriate order.

In an illustrative embodiment of the invention, processes are implemented as objects. A process object comprises the following elements: an executable program; a private address space; system resources (e.g., communication ports and files) that the operating system allocates to the process as the program executes; and at feast one "thread of execution." A "thread" is the entity within a process that the operating system kernel schedules for execution. As is well known in the art, each thread has an associated "context" which is the volatile data associated with the execution of the thread. A thread's context includes the contents of system registers and the virtual address belonging to the threads process. Thus, the actual data comprising a threads context varies as it executes.

Referring to Fig. 1, a zoomed-in view, shown in a display 110, is a schematic representation of a data structure. The schematic shows data nodes 105/115 connected to each other in a branching structure. Because the view is zoomed-in, each data node is large enough to see clearly. In addition, the connections, indicated by connectors 125, are also clear. In a large data structure, for example one used to construct a complex 3-D scene, the number of individual nodes can easily number in the thousands. User's working with such data structure often need to see global as well as local relationships and a large single schematic diagram that represents the entire data structure permits this.

An example where such a data structure might arise is in a 3-D scene. Suppose a graphic artist has "constructed" ten buildings with each building being composed of multiple primitive objects. The number of data nodes, for such a scene could easily be very large.

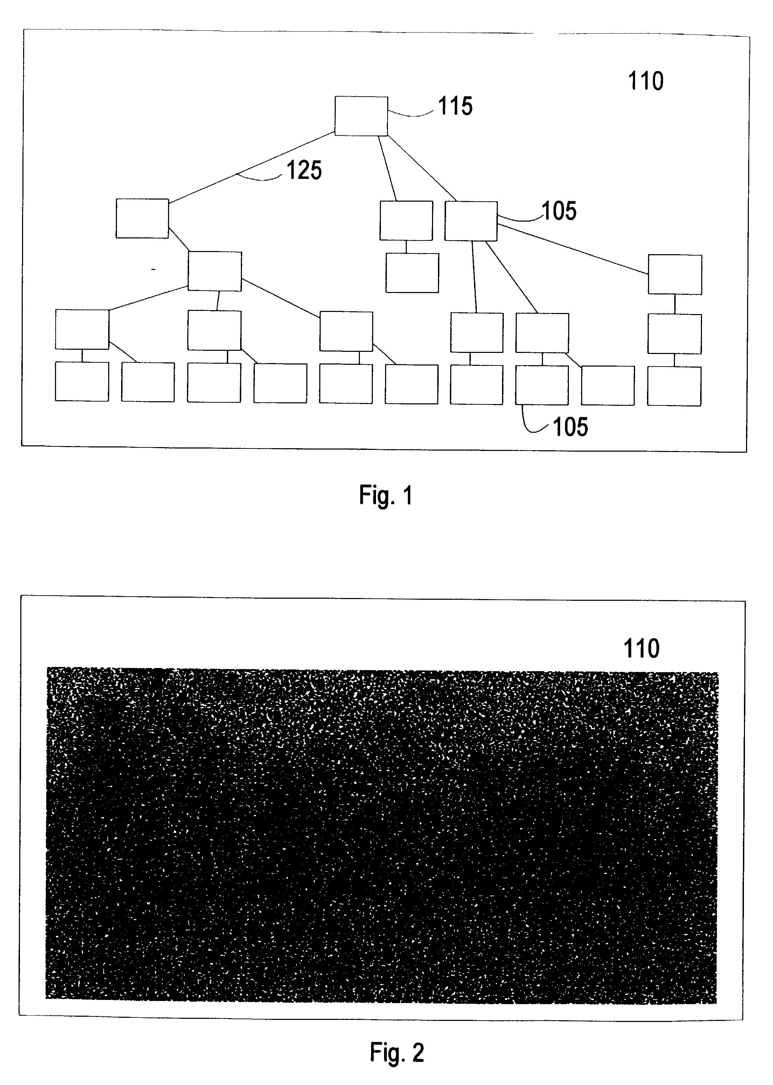

Referring to Fig. 2, the display 110 of the schematic in a zoomed-out view causes all the individual data nodes to become merged together or non-displayable. This is because the data nodes must be scaled with the view to make the relationship information visible. Alternatively such a view could show some information but it would not be clear for a large complex schematic on a screen of limited resolution.

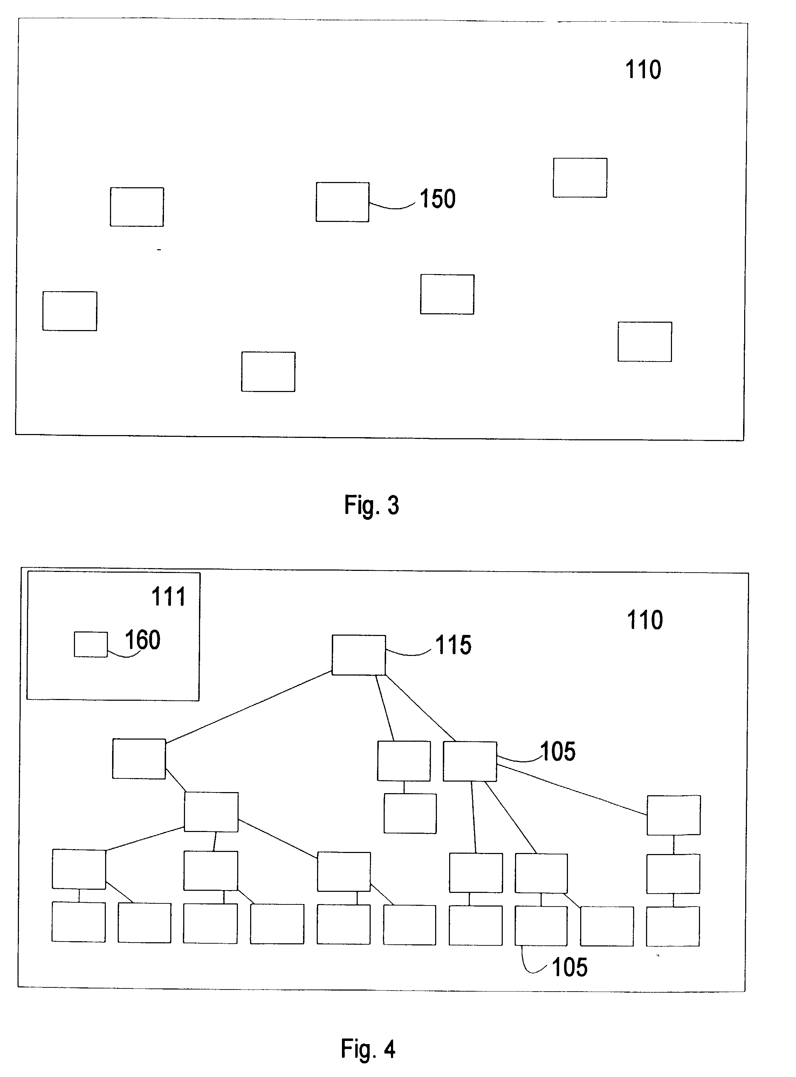

Referring now to Fig. 3, nodes called beacon nodes 150 have been defined for schematic of Fig. 2. The display of Fig. 2 is modified in that the display now shows beacon nodes 150. The beacon nodes, rather than being scaled down to a small size as the schematic is scaled down, reach a predefined lower size limit and continue to be redrawn at that minimum size. Thus, even though the schematic is scaled down to a bird's eye view, the beacon nodes 150 are still readily visible.

Returning to the example of an artist defining ten buildings in a 3-D scene, Suppose the artist wants to examine the data structure for a particular building and then switch his perspective to another building. Using the invention, the artist zooms out and locates the beacon node for the second building. The artist clicks on that beacon node and the display is immediately redrawn with the properly scaled and positioned nodes. To locate the desired beacon node, the artist may pass a mouse pointer over a beacon node or recognize it immediately by its relative position and color. The beacon nodes are drawn somewhere in the vicinity of the clan of objects whose view they define. The particular location relative to the objects can be a corner of the view, the center of the view, or some other location. Thus, the location of the beacon node, relative to the 'canvas' of the entire schematic, gives some indication of its identity.

A beacon node is identified with a clan of data nodes. When the view associated with the beacon node is invoked, the display changes to show all elements of the clan. The display may show substantial margins around the perimeter clan elements or make the clan elements as large as possible. Beacon nodes need not show any kind of relationship between themselves. They are simply UI elements that represent groups of nodes the user wants to highlight in a schematic diagram. Clans need not be mutually exclusive, ie, beacon nodes that contain elements belonging to the clan of another beacon node may be defined without any loss problem. The beacon nodes may be made more distinguishable through colors, shapes, sizes, etc. As in other types of graphical environments they may be grouped in layers that may be selectively displayed. Each beacon node may have a name, which may be of variable length.

To define a beacon node, the user displays the set of data nodes desired to form the clan for a beacon node. Once displayed, the user may form a multiple selection, such as by draw a bounding box around a set of data nodes to define a selection set. Using a context menu or keyboard shortcut, the user may define a beacon node. A dialogue box may open for the user to identify the beacon node with a name. Also, the beacon node may be given a color to make it easier to recall. When a beacon is expanded and framed, the beacon node is usually located at the top left corner of the clan's bounding rectangle. However, its relative position in the schematic view can vary if the bounding rectangle is resized to include nodes that were moved outside the current clan's boundaries. Beacon nodes could optionally be defined as 'fixed', in which case they will not change position when any contained node is moved. Also, the beacon nodes are always drawn on top of the data nodes, so they are always visible.

To bring a beacon node's clan into view, a user may first select a beacon node using a pointing device such as a mouse (or some other method for selecting a beacon may be used). Then, the whole clan may be framed (by invoking a 'Frame' command). As a result of framing the selected clan, the view is panned and zoomed so that the bounding rectangle determined by the positions of the clan members coincides with the aperture of the display window.

Referring to Fig. 4, an enhancement of a beacon node display includes a small window that provides a bird's eye perspective in a window 111 indicating where the current display (or viewport) 110 is with respect to a zoomed-out schematic. In other words, the bird's eye window shows the entire plan of the schematic without showing any nodes with the perimeter of the bird's eye view coinciding with the extremes of the overall schematic. The bird's eye view shows, however, an outline 160 that indicates where the current viewport 110 is located with respect to the entire schematic, which corresponds to the entire area (window) shown at 110. So if the current view is off to the left of the overall schematic, the bird's eye window 111 will show a box on the left side of the bird's eye window 111. The bird's eye view may also show the beacon nodes. Note that in an alternative to the embodiments described above, the beacon nodes may be shown in a separate window or display. For example, the beacon nodes may be painted not only on top of the data nodes, but in the bird's eye view window discussed above or in a separate window or swappable display. In these instances, the beacon nodes would be positioned relative to the boundaries of a window or the display (or box drawn in the display or window) as they would be positioned relative to the outer perimeter of the schematic. Also, although in the above embodiments, the beacon nodes are scaled proportionately with the schematic, it is possible to scale the beacon nodes at a rate that is slower than the scaling of the schematic such that the beacon nodes remain visible when the schematic is scaled to its smallest possible size. Beacon nodes displayed in a bird's eye view may also be active, i.e., respond to mouse clicks which cause the current viewport to frame the corresponding clan. (Also, instead of typing in a name for the beacon node, it may be possible to provide for the drawing of a connection between some other data object with which the beacon node is to be associated. In other words, an icon or some other selectable item may be associate rather than, or in addition to, typing in a text string.

Note that since the view identified with a beacon node is a clan of elements, the process of returning the display to the selected-beacon-node-view involves (it must) dynamically reconstructing and/or redrawing the view based on the current status of the clan objects. That is, the process would be as follows: A beacon node is selected, Responsively to the selection, a clan of picture elements or data objects is identified. The relationship between the data objects is used to draw a picture that represents the objects and the relationship between the objects. Thus, the view to which the beacon node returns the view may be different if the clan elements or a relationship between them changes in the intervening time. For example, connections between data objects may be broken, newly established, or clan elements may be added or deleted.

Note, according to the preferred embodiment, the process of generating a display is a dynamic one. The view is generated in response to the locations and identities of the members of the clan. Any modifications to the members of the clan, their interrelationships, their number, etc. are automatically taken into account in generating the view. This is not the case with a static view, although features of the user interface described herein may be used for selecting a static view (as in the prior art notion of a "bookmark") as well. Thus, the manner of selecting clans can be used to select, instead, views or bookmarks.

## Claims

1. On a computer having a display, a memory, and an icon selector, said display being one of a screen and a window, a method of invoking views of a picture on a display, said picture having picture elements, comprising the steps of:
selecting one a group of picture elements and a view of said picture;
labeling and storing a selection responsively to a result of said step of selecting, such that said one of a group and a view may be selectively displayed on said display;
painting an icon on top of said picture elements and storing an association between said icon and said one of a group and a view;
changing said display to show first and second different views of said picture;
detecting a selection of said icon by said icon selector;
changing said display to display said one of a group and a view responsively to said step of detecting.

2. A method as in claim 1, wherein said picture is a schematic diagram showing relationships between data objects.

3. A method as in claim 1, wherein said step of detecting includes detecting a position of a pointer.

4. A method as in claim 1, wherein said step of selecting one of a group and a view is selecting a group of picture elements.

5. A method as in claim 4, wherein said step of changing results in a display of said group of picture elements such that said group is substantially coextensive with said display.

6. A method as in claim 1, wherein said step of painting includes selectively scaling said icon concurrently with a scaling of said picture such that icon remains visible on said display irrespective of a scale of said schematic.

7. A method as in claim 1, wherein said step of labeling includes typing a name string identifying said one of a group and a view.

8. A method for navigating a display of a computer displaying a picture composed of picture elements, comprising the steps of:
selecting a portion of said picture;
storing a definition of said portion;
painting an icon on top of said picture portion;
scaling said picture such that substantially said entire picture fits on said display, said picture being large enough that details of said picture are not clearly visible;
applying a scale-factor in painting said icon such that said icon remains clearly visible when said entirety of said picture is displayed;
selecting said icon; and
displaying said portion of said picture responsively to said step of selecting.

9. A method as in claim 8, wherein said step of displaying includes rendering a picture from a group of objects identified with the icon and a relationship between the group of objects that is a defined feature of the picture.

10. A method as in claim 8, wherein said step of applying includes permitting a scaling of said icon proportionately with said picture down to a threshold scale of said picture and maintaining said icon at a minimum size for picture scales below said threshold scale of said picture.

11. A method as in claim 8, wherein said step of selecting includes:
displaying a desired view of said picture; and
indicating a request to save said desired view;
said step of storing being responsive to said step of indicating a request.

12. A method as in claim 8, wherein said step of selecting includes selecting a group of said picture elements.

13. A method as in claim 8, wherein step of selecting includes pointing to said icon with a pointing tool.

14. A method as in claim 8, further comprising the step of identifying a color to be used in painting said icon.

15. A method as in claim 14, further comprising the step of identifying a shape to be used in painting said icon.

16. A method for navigating a display of a computer displaying a picture composed of picture elements, comprising the steps of:
selecting a portion of said picture;
storing a definition of said portion;
painting an navigational aid on said display;
scaling said picture such that substantially said entire picture fits on said display, said picture being large enough that details of said picture are not clearly visible;
applying a scale-factor in painting said navigational aid such that said navigational aid remains clearly visible when said entirety of said picture is displayed;
selecting said navigational aid; and
displaying said portion of said picture responsively to said step of selecting.

17. A method for navigating a display of a computer displaying a picture composed of picture elements, comprising the steps of:
selecting a portion of said picture;
storing a definition of said portion;
painting an navigational aid on said canvas;
scaling a canvas representative of said picture such that substantially an entirety of said entire picture is represented on said displayed canvas;
applying a scale-factor in painting said navigational aid such that said navigational aid remains clearly visible when said canvas is so scaled;
selecting said navigational aid; and
displaying said portion of said picture responsively to said step of selecting.

18. A system for representing picture representing data objects and relationships therebetween, comprising:
an input device to define and edit relationships among said data objects;
a display device to display a said picture, said display device being operable to zoom and pan to display all or selected portions of said picture;
a first selection device to define at least one group of said data objects and a corresponding visual navigation aid for said group;
said visual navigational aid being displayed such that it is clearly visible at all levels of zoom of said picture;
a second selection device to indicate a selection of said visual navigation aid;
said display device being programmed to display said group responsively to a selection of said corresponding visual navigation aid, such that each of said data objects of said group is clearly visible.
